# EUROPÄISCHE PATENTSCHRIFT

(11) **EP 3 961 082 B1**
(45) Veröffentlichungstag und Bekanntmachung des Hinweises auf die Patenterteilung: **30.04.2025**
(21) Anmeldenummer: 20193627.5
(22) Anmeldetag: 31.08.2020
(51) Int. Cl.: F17C 5/02

(54) **ANSCHLUSSGARNITUR, TANKSYSTEM UND ZAPFSÄULE**
CONNECTION FITTING, FILLING SYSTEM AND DISPENSER
GARNITURE DE RACCORDEMENT, SYSTÈME DE RÉSERVOIR ET POMPE DISTRIBUTRICE

(43) Veröffentlichungstag der Anmeldung: 02.03.2022
(73) Patentinhaber: SAG Group B.V., 2222 AK Katwijk (NL)
(72) Erfinder: BERGER, Simon, 6391 Fieberbrunn (AT)
(74) Vertreter: Weiser Voith Gugler Patentanwälte Partnerschaft

(56) Entgegenhaltungen:
- EP-A1- 3 572 710
- DE-A1- 102015 001 665
- US-A- 5 301 723
- US-A- 5 353 849
- US-B1- 6 196 280

## Beschreibung

Die vorliegende Erfindung betrifft eine Anschlussgarnitur zum lösbaren Anschließen einer Zapfsäule, welche eine Rückführleitung für Kryogas hat, an ein Tanksystem mit einem Behälter für ein Zweiphasengemisch aus Kryogas und Kryoflüssigkeit, welches Tanksystem eine von einem Kopfbereich des Behälters ausgehende Entgasungsleitung hat, umfassend: eine mit der Entgasungsleitung verbindbare Entgasungsbuchse und einen mit der Rückführleitung verbindbaren Entgasungsstecker zum lösbaren Anschließen an die Entgasungsbuchse. Die Erfindung betrifft ferner ein Tanksystem und eine Zapfsäule, welche jeweils mit einem Teil der Anschlussgarnitur ausgestattet sind.

Eine Anschlussgarnitur der genannten Art ist beispielsweise aus US 6 196 280 B1 bekannt.

Um den Energiegehalt von Energieträgern, welche unter Normalbedingungen gasförmig sind, zu erhöhen, werden diese für Transport- und Lagerzwecke entweder komprimiert und in einem Druckbehälter gespeichert oder auf Tieftemperatur abgekühlt, dabei verflüssigt und in einem temperaturisolierten Behälter gespeichert. So werden beispielsweise zum Antrieb von Fahrzeugen verflüssigtes Erdgas (Liquefied Natural Gas, LNG) oder verflüssigter Wasserstoff als Zweiphasengemisch mit hoher Energiedichte gespeichert, um hinterher beispielsweise zum Betrieb von Verbrennungskraftmaschinen oder Brennstoffzellen der Fahrzeuge genutzt zu werden. Auch dabei steht der Behälter für das Zweiphasengemisch aus Kryogas und Kryoflüssigkeit gegenüber der Umgebung unter einem Überdruck, beispielsweise im Falle von LNG unter einem Druck zwischen etwa 7 - 10 bar, bei welchem ein Betanken erfolgt, und etwa 16 bar, oberhalb dessen ein kontrolliertes Abdampfen ("Boil-Off") über Sicherheitsventile erfolgt. Der Behälterinnendruck ist auch beim Befüllen (Betanken) des Behälters zu überwachen, wozu während des Zuführens von Kryoflüssigkeit Kryogas aus dem Kopfbereich des Behälters entnommen wird, um zu hohen Behälterinnendruck zu verhindern. Dazu dienen die Entgasungsleitung des Tanksystems und die Rückführleitung der Zapfsäule.

Die Entgasungsleitung ist aus Sicherheitsgründen mit zwei Absperrelementen versehen, welche in Reihe geschaltet sind; meist sind diese Absperrelemente ein manuell bedienbares Absperrventil oder ein elektrisches Schaltventil und in Reihe dazu ein (zweites) elektrisches Schaltventil oder ein Rückschlagventil. Manuell bedienbare Absperrventile erhöhen die Gefahr einer Fehlbedienung, z.B. eines Offenlassens nach dem Betanken, und erfordern ein zugängliches Bedienelement, welches eine zusätzliche Wärmebrücke darstellt. Sowohl manuell bedienbare Absperrventile als auch elektrische Schaltventile sind aufgrund der meist hohen zu übertragenden Massenströme und der tiefen Temperaturen, welchen sie dabei ausgesetzt sind, groß zu dimensionieren; ein elektrisches Schaltventil benötigt ferner eine elektrische Schnittstelle, welche eine zusätzliche Wärmebrücke und Fehlerquelle darstellt. Rückschlagventile haben den Nachteil, dass die damit versehene Leitung nur in eine Richtung betrieben werden, sodass im Fall der Entgasungsleitung kein Gas abgeführt werden könnte. Andererseits sind Rückschlagventile im Vergleich zu anderen Absperrelementen meist kleiner und dichten zuverlässig ab.

Die vorliegende Erfindung setzt sich zum Ziel, eine Anschlussgarnitur, ein Tanksystem und eine Zapfsäule zu schaffen, welche die erforderliche Sicherheit im Betrieb und beim Befüllen gewährleisten und zuverlässig einsetzbar sind.

Gemäß einem ersten Aspekt der Erfindung wird dieses Ziel mit einer Anschlussgarnitur der einleitend genannten Art erreicht, welche sich dadurch auszeichnet, dass die Entgasungsbuchse zwei in Reihe geschaltete federbelastete Rückschlagventile mit vom Behälter abgewandter Sperrrichtung enthält und der Entgasungsstecker einen Zapfen hat, durch welchen beide Rückschlagventile der Entgasungsbuchse bei angeschlossenem Entgasungsstecker gegen ihre Sperrrichtung geöffnet sind.

Die Entgasungsbuchse stellt aufgrund der beiden in Reihe geschalteten Rückschlagventile und ihrer Sperrrichtungen sicher, dass während des Betriebs des Tanksystems kein Kryogas aus der Entgasungsleitung entweicht. Die platzsparende Bauweise von Rückschlagventilen erlaubt deren Einbau in die Entgasungsbuchse. Mit dem Zapfen des Entgasungssteckers werden auch zum Betanken die beiden Rückschlagventile einzeln nacheinander geöffnet, sodass ein sicheres Anschließen des Entgasungssteckers an die Entgasungsbuchse und damit an die Entgasungsleitung bzw. ein sicheres Lösen davon gewährleistet sind. Die Anschlussgarnitur mit der Entgasungsbuchse ermöglicht einen Betrieb der Entgasungsleitung in beide Richtungen; weder eine elektrische Schnittstelle noch ein Bedienhebel sind erforderlich.

In einer bevorzugten Ausführungsform, bei welcher die Zapfsäule ferner eine Speiseleitung für Kryoflüssigkeit und das Tanksystem ferner eine in den Behälter mündete Füllleitung hat, umfasst die Anschlussgarnitur eine mit der Füllleitung verbindbare Füllbuchse und einen mit der Speiseleitung verbindbaren Füllstecker zum lösbaren Anschließen an die Füllbuchse, wobei die Füllbuchse zwei in Reihe geschaltete federbelastete Rückschlagventile mit vom Behälter abgewandter Sperrrichtung enthält und der Füllstecker einen Zapfen hat, durch welchen beide Rückschlagventile der Füllbuchse bei angeschlossenem Füllstecker gegen ihre Sperrrichtung geöffnet sind. Wie gleichermaßen die Entgasungsbuchse und der Entgasungsstecker erfüllen die Füllbuchse und den Füllstecker die hohen Sicherheitsanforderungen sowohl im Betrieb als auch während des Betankens.

Zur einfachen Handhabung ist besonders günstig, wenn Füll- und Entgasungsstecker an einer gemeinsamen Zapfpistole verankert sind.

Gemäß einem zweiten Aspekt schafft die Erfindung ein Tanksystem, welches einen Behälter zur Aufnahme eines Zweiphasengemischs aus Kryogas und Kryoflüssigkeit, eine von einem Kopfbereich des Behälters ausgehende Entgasungsleitung und eine mit der Entgasungsleitung in Verbindung stehende Entgasungsbuchse zum lösbaren Anschließen eines Entgasungssteckers der vorgenannten Art umfasst und sich dadurch auszeichnet, dass die Entgasungsbuchse zwei in Reihe geschaltete federbelastete Rückschlagventile mit vom Behälter abgewandter Sperrrichtung enthält. In einer bevorzugten Ausführungsform umfasst das Tanksystem ferner eine in den Behälter mündende Füllleitung, eine mit der Füllleitung in Verbindung stehende Füllbuchse zum lösbaren Anschließen eines Füllsteckers der vorgenannten Art, wobei die Füllbuchse zwei in Reihe geschaltete federbelastete Rückschlagventile mit vom Behälter abgewandter Sperrrichtung enthält. Hinsichtlich der Vorteile eines solchen Tanksystems wird auf die obigen Ausführungen zur Anschlussgarnitur verwiesen.

Günstig ist ferner, wenn der Behälter, die Füllleitung und die Entgasungsleitung im Inneren eines thermisch isolierenden Gehäuses angeordnet sind, welches von der Füllbuchse und von der Entgasungsbuchse durchsetzt ist. Dadurch kann eine weitere thermische Isolation des Behälters, der Füllleitung und/oder der Entgasungsleitung entfallen.

Besonders vorteilhaft ist dabei, wenn die Füllleitung und die Entgasungsleitung frei von Schaltventilen sind. Aufgrund der jeweils zwei in Reihe geschalteten Rückschlagventile in der Füllbuchse und der Entgasungsbuchse sind weitere Schaltventile in der Füll- und Entgasungsleitung nicht erforderlich. Das hilft, Bauraum zu sparen und die Fehleranfälligkeit des Tanksystems zu reduzieren.

Gemäß einem dritten Aspekt schafft die Erfindung eine Zapfsäule, welche eine Rückführleitung für Kryogas und einen mit der Rückführleitung in Verbindung stehenden Entgasungsstecker zum lösbaren Anschließen an eine Entgasungsbuchse der vorgenannten Art umfasst und sich dadurch auszeichnet, dass der Entgasungsstecker einen Zapfen hat, durch welchen beide Rückschlagventile der Entgasungsbuchse bei angeschlossenem Entgasungsstecker gegen ihre Sperrrichtung geöffnet sind. Hinsichtlich weiterer Ausführungsformen und Vorteile wird auf die obigen Ausführungen zur Anschlussgarnitur verwiesen.

Die Erfindung wird nachfolgend anhand eines in der beigeschlossenen Zeichnung dargestellten Ausführungsbeispiels näher erläutert. Darin zeigt:

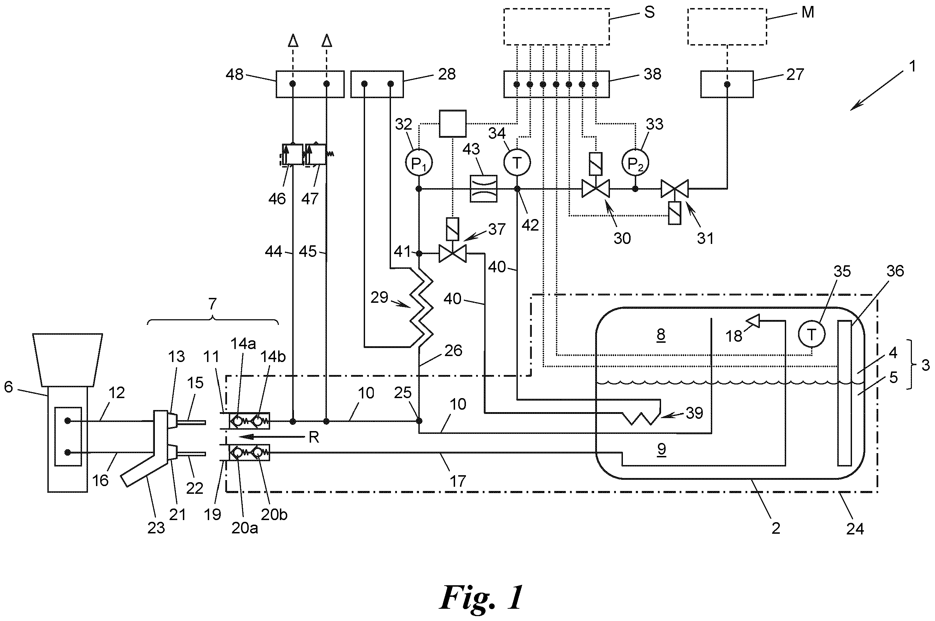

Fig. 1 ein Tanksystem und eine Zapfsäule mit einer erfindungsgemäßen Anschlussgarnitur in Form eines vereinfachten Hydraulikschemas.

Fig. 1 zeigt ein Tanksystem 1 mit einem Behälter 2, in welchem ein Zweiphasengemisch 3 aus Kryogas 4 und Kryoflüssigkeit 5 aufgenommen ist. Ferner zeigt Fig. 1 eine Zapfsäule 6 und eine Anschlussgarnitur 7 über welche die Zapfsäule 6 an das Tanksystem 1 lösbar angeschlossen werden kann, wie im Folgenden näher erläutert wird.

Das weniger dichte Kryogas 4 befindet sich in einem Kopfbereich 8 des Behälters 2, wogegen sich die dichtere Kryoflüssigkeit 5 in einem Bodenbereich 9 des Behälters sammelt. Von dem Kopfbereich 8 des Behälters 2 geht eine Entgasungsleitung 10 des Tanksystems 1 aus. Die Entgasungsleitung 10 ist an ihrem dem Behälter 2 abgewandten Ende mit einer Entgasungsbuchse 11 der Anschlussgarnitur 7 verbindbar (hier: in Verbindung stehend, d.h. verbunden), d.h. dicht und nicht lösbar verbindbar bzw. verbunden, z.B. geschweißt, geklebt oder einstückig ausgeführt.

Die Zapfsäule 6 hat eine Rückführleitung 12 für Kryogas 4. Die Rückführleitung 12 ist mit einem Entgasungsstecker 13 der Anschlussgarnitur 7 verbindbar (hier: ebenso verbunden). Der Entgasungsstecker 13 kann an die Entgasungsbuchse 11 lösbar angeschlossen, d.h. flüssigkeits- und gas dicht angekuppelt und wieder davon gelöst werden.

Um den Behälter 2 und die von seinem Kopfbereich 8 ausgehende Entgasungsleitung 10 im Betrieb des Tanksystems 1 nach außen dicht abschließen, enthält die Entgasungsbuchse 11 zwei in Reihe geschaltete federbelastete Rückschlagventile 14a, 14b, welche jeweils eine vom Behälter 2 abgewandte Sperrrichtung R haben.

Der Entgasungsstecker 13 hat einen Zapfen 15. Beim Anschließen des Entgasungssteckers 13 an die Entgasungsbuchse 11 - z.B. zum Befüllen (Betanken) des Behälters 2 des Tanksystems 1 - greift der Zapfen 15 des Entgasungssteckers 13 in die Entgasungsbuchse 11 ein und öffnet der Reihe nach zunächst das äußere Rückschlagventil 14a der Entgasungsbuchse 11 und in weiterer Folge das innere Rückschlagventil 14b der Entgasungsbuchse 11. Beide Rückschlagventile 14a, 14b der Entgasungsbuchse 11 sind somit bei angeschlossenem Entgasungsstecker 13 durch seinen Zapfen 15 jeweils gegen ihre Sperrrichtung R geöffnet. Die Entgasungsleitung 10 kann somit in beide Richtungen, d.h. in Sperrrichtung R und in einer dazu entgegengesetzten Durchlassrichtung der Rückschlagventile 14a, 14b betrieben werden.

Die Zapfsäule 6 hat gemäß dem Beispiel der Fig. 1 eine Speiseleitung 16 für Kryoflüssigkeit 5, aus welcher das Tanksystem 1 beim Betanken des Behälters 2 gespeist wird. Ferner hat zum Betanken das Tanksystem 1 eine in den Behälter 2 mündende Füllleitung 17. Die Füllleitung 17 mündet optional, wie dem Fachmann bekannt ist, in eine Sprühdüse 18 im Inneren des Behälters 2. Mit der Füllleitung 17 des Tanksystems 1 ist eine Füllbuchse 19 der Anschlussgarnitur 7 verbindbar (hier: verbunden), welche - ähnlich zur Entgasungsbuchse 11 - zwei in Reihe geschaltete federbelastete Rückschlagventile 20a, 20b enthält, deren Sperrrichtungen R ebenfalls vom Behälter 2 abgewandt sind. Mit der Speiseleitung 16 der Zapfsäule 6 verbindbar (hier wieder: verbunden) ist ein Füllstecker 21 der Anschlussgarnitur 7, welcher lösbar an die Füllbuchse 19 angeschlossen werden kann. Vergleichbar mit dem Entgasungsstecker 13 hat auch der Füllstecker 21 einen Zapfen 22, welcher beim Anschließen des Füllsteckers 21 an die Füllbuchse 19 zunächst das äußere Rückschlagventil 20a der Füllbuchse 19 und in weiterer Folge das innere Rückschlagventil 20b der Füllbuchse 19 öffnet, sodass beide Rückschlagventile 20a, 20b der Füllbuchse 19 bei angeschlossenem Füllstecker 21 gegen ihre jeweilige Sperrrichtung R geöffnet sind und folglich auch der Füllleitung 17 in beide Richtungen betrieben werden kann.

Es versteht sich, dass beim Lösen des Entgasungssteckers 13 aus der Entgasungsbuchse 11 bzw. beim Lösen des Füllsteckers 21 aus der Füllbuchse 19 jeweils die Rückschlagventile 14a, 14b, 20a, 20b freigegeben werden und aufgrund ihrer Federbelastung schließen. Ferner versteht sich, dass jeweils die Rückschlagventile 14a, 14b der Entgasungsbuchse 11 und die Rückschlagventile 20a, 20b der Füllbuchse 19 aufgrund ihrer Serienschaltung voneinander mechanisch getrennt sind, sodass sie voneinander unabhängig schließen bzw. durch die Zapfen 15, 22 geöffnet werden.

Im Beispiel der Fig. 1, sind der Füllstecker 21 und der Entgasungsstecker 13 optional an einer gemeinsamen Zapfpistole 23 verankert, sodass sie gemeinsam gehandhabt werden können.

In Fig. 1 nicht dargestellt ist, dass die Zapfsäule 6 im Allgemeinen mit einem Speicher für ein Zweiphasengemisch aus Kryogas 4 und Kryoflüssigkeit 5 in Verbindung steht, aus welchem die Zapfsäule 6 Kryoflüssigkeit 5 entnimmt, um diese beim Betanken mithilfe der Speiseleitung 16 in das Tanksystem 1 einzuspeisen, und in welchen die Zapfsäule 6 mithilfe der Rückführleitung 12 Kryogas 4 aus dem Tanksystem 1 rückführt. Dazu kann die Zapfsäule 6 ferner nach Erfordernis über eine oder mehrere Pumpen und/oder Kühler verfügen.

In dem dargestellten Beispiel sind der Behälter 2, die Füllleitung 17 und die Entgasungsleitung 10 optional im Inneren eines thermisch isolierenden Gehäuses 24 angeordnet, welches von der Füllbuchse 19 und der Entgasungsbuchse 11 durchsetzt ist. Die Füllleitung 17 und die Entgasungsleitung 10 sind in der dargestellten Ausführungsform frei von Schaltventilen.

Der Vollständigkeit halber seien im Folgenden weitere optionale Bauteile beschrieben, welche das Tanksystems 1 in der beispielhaften Ausführungsform der Fig. 1 umfasst, auf welche es jedoch nicht beschränkt ist.

In dieser Ausführungsform des Tanksystems 1 zweigt beispielsweise von der Entgasungsleitung 10 an einem Abzweigungspunkt 25 eine Entnahmeleitung 26 ab, über welche ein an eine Verbraucherkonsole 27 abschließbarer Verbraucher M gespeist werden kann. Die Entnahmeleitung 26 führt durch einen über eine Heizkonsole 28 mit Wärme versorgten Wärmetauscher 29 und hat in diesem Beispiel zwei optionale Schaltventile 30, 31, vor ihrem Einmünden in die Verbraucherkonsole 27. An der Entnahmeleitung 26 liegen ferner zwei Drucksensoren 32, 33 und ein Temperatursensor 34 zur Regelung der Entnahme von Kryogas 4 aus dem Behälter 2. Diese Sensoren 32, 33, 34 sind gemeinsam mit den Schaltventilen 30, 31, einem im Behälter 2 angeordneten weiteren Temperatursensor 35, einem im Behälter 2 angeordneten Füllstandssensor 36 und einem weiteren Schaltventil 37 in eine Steuerungskonsole 38 verdrahtet, wo eine externe Steuerung S angeschlossen werden kann. Das weitere Schaltventil 37 aktiviert bzw. deaktiviert in diesem Beispiel eine im Inneren des Behälters 2 angeordnete Heizung 39 über eine Heizleitung 40, welche an einer stromab des Wärmetauschers 29 liegenden Abzweigung 41 von der Entnahmeleitung 26 abzweigt, durch die Heizung 39 führt und an einer stromab der Abzweigung 41 liegenden Einmündung 42 wieder in die Entnahmeleitung 26 mündet; zwischen Abzweigung 41 und Einmündung 42 ist in der Entnahmeleitung 26 eine Drossel 43 angeordnet. Neben der Entnahmeleitung 26 und der Heizleitung 40 durchsetzen zwei Überdruckleitungen 44, 45 das Gehäuse 24, welche im dargestellten Beispiel von der Entgasungsleitung 10 ausgehen, jeweils mit einem Überdruckventil 46, 47 versehen sind und in eine Überdruckkonsole 48 münden.

Die Erfindung ist nicht auf die dargestellte Ausführungsform beschränkt, sondern umfasst alle Varianten, Modifikationen und deren Kombinationen die in den Rahmen der angeschlossenen Ansprüche fallen.

## Patentansprüche

1. Anschlussgarnitur zum lösbaren Anschließen einer Zapfsäule (6), welche eine Rückführleitung (12) für Kryogas (4) hat, an ein Tanksystem (1) mit einem Behälter (2) für ein Zweiphasengemisch (3) aus Kryogas (4) und Kryoflüssigkeit (5), welches Tanksystem (1) eine von einem Kopfbereich (8) des Behälters (2) ausgehende Entgasungsleitung (10) hat, umfassend:
eine mit der Entgasungsleitung (10) verbindbare Entgasungsbuchse (11) und einen mit der Rückführleitung (12) verbindbaren Entgasungsstecker (13) zum lösbaren Anschließen an die Entgasungsbuchse (11),
**dadurch gekennzeichnet, dass**
die Entgasungsbuchse (11) zwei in Reihe geschaltete federbelastete Rückschlagventile (14a, 14b) mit vom Behälter (2) abgewandter Sperrrichtung (R) enthält und der Entgasungsstecker (13) einen Zapfen (15) hat, durch welchen beide Rückschlagventile (14a, 14b) der Entgasungsbuchse (11) bei angeschlossenem Entgasungsstecker (13) gegen ihre Sperrrichtung (R) geöffnet sind.

2. Anschlussgarnitur nach Anspruch 1, ferner umfassend eine Füllbuchse (19), welche mit einer in den Behälter (2) mündenden Füllleitung (17) des Tanksystems (1) verbindbar ist, und einen Füllstecker (21), welcher mit einer für Kryoflüssigkeit (5) geeigneten Speiseleitung (16) der Zapfsäule (6) verbindbar ist, zum lösbaren Anschließen an die Füllbuchse (19), wobei die Füllbuchse (19) zwei in Reihe geschaltete federbelastete Rückschlagventile (20a, 20b) mit vom Behälter (2) abgewandter Sperrrichtung (R) enthält und der Füllstecker (21) einen Zapfen (22) hat, durch welchen beide Rückschlagventile (20a, 20b) der Füllbuchse (19) bei angeschlossenem Füllstecker (21) gegen ihre Sperrrichtung (R) geöffnet sind.

3. Anschlussgarnitur nach Anspruch 2, **dadurch gekennzeichnet, dass** Füll- und Entgasungsstecker (21, 13) an einer gemeinsamen Zapfpistole (23) verankert sind.

4. Tanksystem, umfassend einen Behälter (2) zur Aufnahme eines Zweiphasengemischs (3) aus Kryogas (4) und Kryoflüssigkeit (5), eine von einem Kopfbereich (8) des Behälters (2) ausgehende Entgasungsleitung (10) und eine mit der Entgasungsleitung (10) in Verbindung stehende Entgasungsbuchse (11) zum lösbaren Anschließen eines Entgasungssteckers (13) der Anschlussgarnitur (7) nach einem der Ansprüche 1 bis 3, **dadurch gekennzeichnet, dass** die Entgasungsbuchse (11) zwei in Reihe geschaltete federbelastete Rückschlagventile (14a, 14b) mit vom Behälter (2) abgewandter Sperrrichtung (R) enthält.

5. Tanksystem nach Anspruch 4, ferner umfassend eine in den Behälter (2) mündende Füllleitung (17), eine mit der Füllleitung (17) in Verbindung stehende Füllbuchse (19) zum lösbaren Anschließen eines Füllsteckers (21) der Anschlussgarnitur (7) nach Anspruch 2 oder 3, **dadurch gekennzeichnet, dass** die Füllbuchse (19) zwei in Reihe geschaltete federbelastete Rückschlagventile (20a, 20b) mit vom Behälter (2) abgewandter Sperrrichtung (R) enthält.

6. Tanksystem nach Anspruch 5, **dadurch gekennzeichnet, dass** der Behälter (2), die Füllleitung (17) und die Entgasungsleitung (10) im Inneren eines thermisch isolierenden Gehäuses (24) angeordnet sind, welches von der Füllbuchse (19) und von der Entgasungsbuchse (11) durchsetzt ist.

7. Tanksystem nach Anspruch 6, **dadurch gekennzeichnet, dass** die Füllleitung (17) und die Entgasungsleitung (10) frei von Schaltventilen sind.

8. Zapfsäule, umfassend eine Rückführleitung (12) für Kryogas (4) und einen mit einer Rückführleitung (12) in Verbindung stehenden Entgasungsstecker (13) zum lösbaren Anschließen an eine Entgasungsbuchse (11) der Anschlussgarnitur (7) nach einem der Ansprüche 1 bis 3, **dadurch gekennzeichnet, dass** der Entgasungsstecker (13) einen Zapfen (15) hat, durch welchen beide Rückschlagventile (14a, 14b) der Entgasungsbuchse (11) bei angeschlossenem Entgasungsstecker (13) gegen ihre Sperrrichtung (R) geöffnet sind.

9. Zapfsäule nach Anspruch 8, ferner umfassend eine Speiseleitung (16) für Kryoflüssigkeit (5), einen mit einer Speiseleitung (16) in Verbindung stehenden Füllstecker (21) zum lösbaren Anschließen an eine Füllbuchse (19) der Anschlussgarnitur (7) nach Anspruch 2 oder 3, **dadurch gekennzeichnet, dass** der Füllstecker (21) einen Zapfen (22) hat, durch welchen beide Rückschlagventile (20a, 20b) der Füllbuchse (19) bei angeschlossenem Füllstecker (21) gegen ihre Sperrrichtung (R) geöffnet sind.

10. Zapfsäule nach Anspruch 9, **dadurch gekennzeichnet, dass** Füll- und Entgasungsstecker (21, 13) an einer gemeinsamen Zapfpistole (23) verankert sind.

## Claims

1. A connection set for detachably connecting a dispenser (6), which has a return line (12) for cryogenic gas (4), to a tank system (1) with a container (2) for a two-phase mixture (3) of cryogenic gas (4) and cryogenic liquid (5), which tank system (1) has a degassing line (10) extending from a head region (8) of the container (2), comprising:
a degassing socket (11), which is connectable to the degassing line (10), and a degassing plug (13) which is connectable to the return line (12), for detachably connecting to the degassing socket (11),
**characterised in that**
the degassing socket (11) contains two spring-loaded non-return valves (14a, 14b), which are connected in series and which have a blocking direction (R) facing away from the container (2), and the degassing plug (13) has a pin (15), by means of which both non-return valves (14a, 14b) of the degassing socket (11) are opened against their blocking direction (R) when the degassing plug (13) is connected.

2. The connection set according to claim 1, further comprising a filling socket (19), which is connectable to a filling line (17) of the tank system (1) opening into the container (2), and a filling plug (21), which is connectable to a feed line (16) of the dispenser (6) suitable for cryogenic liquid (5), for detachably connecting to the filling socket (19), wherein the filling socket (19) contains two spring-loaded non-return valves (20a, 20b), which are connected in series and which have a blocking direction (R) facing away from the container (2), and the filling plug (21) has a pin (22), by means of which both non-return valves (20a, 20b) of the filling socket (19) are opened against their blocking direction (R) when the filling plug (21) is connected.

3. The connection set according to claim 2, **characterised in that** the filling and degassing plugs (21, 13) are anchored to a common nozzle (23).

4. A tank system, comprising a container (2) for receiving a two-phase mixture (3) of cryogenic gas (4) and cryogenic liquid (5), a degassing line (10) extending from a head region (8) of the container (2) and a degassing socket (11) in communication with the degassing line (10) for detachably connecting a degassing plug (13) of the connection set (7) according to any one of claims 1 to 3, **characterised in that** the degassing socket (11) contains two spring-loaded non-return valves (14a, 14b), which are connected in series and which have a blocking direction (R) facing away from the container (2).

5. The tank system according to claim 4, further comprising a filling line (17) opening into the container (2), a filling socket (19) in communication with the filling line (17) for detachably connecting a filling plug (21) of the connection set (7) according to claim 2 or 3, **characterised in that** the filling socket (19) contains two spring-loaded non-return valves (20a, 20b), which are connected in series and which have a blocking direction (R) facing away from the container (2).

6. The tank system according to claim 5, **characterised in that** the container (2), the filling line (17) and the degassing line (10) are arranged in the interior of a thermally insulating housing (24) which is penetrated by the filling socket (19) and by the degassing socket (11).

7. The tank system according to claim 6, **characterised in that** the filling line (17) and the degassing line (10) are free of switching valves.

8. A dispenser, comprising a return line (12) for cryogenic gas (4) and a degassing plug (13) in communication with a return line (12) for detachably connecting to a degassing socket (11) of the connection set (7) according to any one of claims 1 to 3, **characterised in that** the degassing plug (13) has a pin (15), by means of which both non-return valves (14a, 14b) of the degassing socket (11) are opened against their blocking direction (R) when the degassing plug (13) is connected.

9. The dispenser according to claim 8, further comprising a feed line (16) for cryogenic liquid (5), a filling plug (21) in communication with a feed line (16) for detachably connecting to a filling socket (19) of the connection set (7) according to claim 2 or 3, **characterised in that** the filling plug (21) has a pin (22), by means of which both non-return valves (20a, 20b) of the filling socket (19) are opened against their blocking direction (R) when the filling plug (21) is connected.

10. The dispenser according to claim 9, **characterised in that** the filling and degassing plugs (21, 13) are anchored to a common nozzle (23).

## Revendications

1. Garniture de raccordement pour le raccordement amovible d'un distributeur d'essence (6), lequel possède une conduite de retour (12) pour du gaz cryogénique (4), à un système de réservoir (1) avec un récipient (2) pour un mélange biphasique (3) de gaz cryogénique (4) et de liquide cryogénique (5), lequel système de réservoir (1) possède une conduite de dégazage (10) partant d'une zone de tête (8) du récipient (2), comprenant :
une douille de dégazage (11) pouvant être reliée avec la conduite de dégazage (10) et une fiche de dégazage (13) pouvant être reliée avec la conduite de retour (12) pour le raccordement amovible sur la douille de dégazage (11),
**caractérisée en ce que**
la douille de dégazage (11) contient deux clapets anti-retour (14a, 14b) montés en série et sollicités par ressort avec une direction de blocage (R) opposée au récipient (2) et la fiche de dégazage(13) possède une broche (15) par laquelle les deux clapets anti-retour (14a, 14b) de la douille de dégazage (11) sont ouverts contre leur direction de blocage (R) lorsque la fiche de dégazage (13) est raccordée.

2. Garniture de raccordement selon la revendication 1, comprenant en outre une douille de remplissage (19), laquelle peut être reliée avec une conduite de remplissage (17) du système de réservoir (1) débouchant dans le récipient (2), et une fiche de remplissage (21), laquelle peut être reliée avec une conduite d'alimentation (16) du distributeur d'essence (6) appropriée pour un liquide cryogénique (5), pour le raccordement amovible sur la douille de remplissage (19), où la douille de remplissage (19) contient deux clapets anti-retour (20a, 20b) montés en série et sollicités par ressort avec une direction de blocage (R) opposée au récipient (2) et la fiche de remplissage (21) possède une broche (22) par laquelle les deux clapets an-ti-retour (20a, 20b) de la douille de remplissage (19) sont ouverts contre leur direction de blocage (R) lorsque la fiche de remplissage (21) est raccordée.

3. Garniture de raccordement selon la revendication 2, **caractérisée en ce que** les fiches de remplissage et de dégazage (21, 13) sont ancrées sur un pistolet à essence (23) commun.

4. Système de réservoir comprenant un récipient (2) pour la réception d'un mélange biphasique (3) de gaz cryogénique (4) et de liquide cryogénique (5), une conduite de dégazage (10) partant d'une zone de tête (8) du récipient (2) et une douille de dégazage (11) reliée avec la conduite de dégazage (10) pour le raccordement amovible d'une fiche de dégazage (13) de la garniture de raccordement (7) selon l'une des revendications 1 à 3, **caractérisé en ce que** la douille de dégazage (11) contient deux clapets anti-retour (14a, 14b) montés en série et sollicités par ressort avec une direction de blocage (R) opposée au récipient (2).

5. Système de réservoir selon la revendication 4, comprenant en outre une conduite de remplissage (17) débouchant dans le récipient (2), une douille de remplissage (19) reliée avec la conduite de remplissage (17) pour le raccordement amovible d'une fiche de remplissage (21) de la garniture de raccordement (7) selon la revendication 2 ou 3, **caractérisé en ce que** la douille de remplissage (19) contient deux clapets anti-retour (20a, 20b) montés en série et sollicités par ressort avec une direction de blocage (R) opposée au récipient (2).

6. Système de réservoir selon la revendication 5, **caractérisé en ce que** le récipient (2), la conduite de remplissage (17) et la conduite de dégazage (10) sont disposés à l'intérieur d'un boitier (24) à isolation thermique, lequel est traversé par la douille de remplissage (19) et par la douille de dégazage (11).

7. Système de réservoir selon la revendication 6, **caractérisé en ce que** la conduite de remplissage (17) et la conduite de dégazage (10) sont exemptes de vannes de commutation.

8. Distributeur d'essence comprenant une conduite de retour (12) pour du gaz cryogénique (4) et une fiche de dégazage (13) reliée avec la conduite de retour (12) pour le raccordement amovible sur une douille de dégazage (11) de la garniture de raccordement (7) selon l'une des revendications 1 à 3, **caractérisée en ce que** la fiche de dégazage (13) possède une broche (15), par laquelle les deux clapets anti-retour (14a, 14b) de la douille de dégazage (11) sont ouverts contre leur direction de blocage (R) lorsque la fiche de dégazage (13) est raccordée.

9. Distributeur d'essence selon la revendication 8, comprenant en outre une conduite d'alimentation (16) pour du liquide cryogénique (5), une douille de remplissage (21) reliée avec une conduite d'alimentation (16) pour le raccordement amovible sur une douille de remplissage (19) de la garniture de raccordement (7) selon la revendication 2 ou 3, **caractérisée en ce que** la fiche de remplissage (21) possède une broche (22), par laquelle les deux clapets anti-retour (20a, 20b) de la douille de remplissage (19) sont ouverts contre leur direction de blocage (R) lorsque la fiche de remplissage (21) est raccordée.

10. Distributeur d'essence selon la revendication 9, **caractérisée en ce que** les fiches de remplissage et de dégazage (21, 13) sont ancrées sur un pistolet à essence (23) commun.
